**Europäisches Patentamt**

(19) **European Patent Office**

**Office européen des brevets**

(11) Veröffentlichungsnummer: **0 108 884**

**B1**

(12) **EUROPÄISCHE PATENTSCHRIFT**

(45) Veröffentlichungstag der Patentschrift:
**10.06.87**

(21) Anmeldenummer: **83108961.0**

(22) Anmeldetag: **10.09.83**

(51) Int. Cl.⁴: **C 08 F 14/06,** C 08 F 2/24

(54) Verfahren zur Herstellung von verpastbaren Polymeren des Vinylchlorids.

(30) Priorität: **13.11.82 DE 3242088**

(43) Veröffentlichungstag der Anmeldung:
**23.05.84 Patentblatt 84/21**

(45) Bekanntmachung des Hinweises auf die Patenterteilung:
**10.06.87 Patentblatt 87/24**

(84) Benannte Vertragsstaaten:
**BE CH DE FR GB IT LI SE**

(56) Entgegenhaltungen:
**EP-A-0 090 142**
**DE-A-2 850 105**
**FR-A-2 311 040**
**FR-A-2 316 252**
**US-A-4 150 210**

(73) Patentinhaber: **HÜLS AKTIENGESELLSCHAFT,**
**Patentabteilung / PB 15 - Postfach 13 20, D-4370**
**Marl 1 (DE)**

(72) Erfinder: **Boeke, Burkhard, Dr., Im Hundel 34,**
**D-4358 Haltern (DE)**
Erfinder: **Kalka, Josef, Dr., Im Rohrkamp 6, D-4352**
**Herten (DE)**
Erfinder: **Winter, Hermann, Dr., Spreewaldstrasse**
**1, D-4370 Marl (DE)**

## Beschreibung

Gegenstand der Erfindung ist ein Verfahren zur Herstellung von Vinylchloridpolymerisaten durch diskontinuierliche Polymerisation in Gegenwart von wasserlöslichen Katalysatoren und von Emulgatoren sowie Polymerisationshilfsmitteln.

Es ist bereits bekannt, Polyvinylchlorid, welches für die Pastenherstellung geeignet ist, nach dem kontinuierlichen oder diskontinuierlichen Verfahren herzustellen.

Das kontinuierliche Verfahren führt zu einem Pasten-PVC mit erwünscht niedriger Viskosität im hohen Scherbereich, jedoch mit hoher Viskosität bei niedrigen Schergeschwindigkeiten. Außerdem enthält ein derartiges Polyvinylchlorid einen relativ hohen Anteil an Emulgatoren. Eine hohe Emulgatorkonzentration wirkt sich aber in den Endprodukten und bei der Verarbeitung nachteilig aus. Sie verschlechtert die Transparenz und erhöht die Wasserempfindlichkeit der Polymerisate und der daraus hergestellten Artikel.

Beim diskontinuierlichen Verfahren sind im Prinzip zwei Verfahrensvarianten bekannt. Nach dem sogenannten Mikrosuspensionsverfahren erhält man Latices mit einem relativ geringen Feststoffgehalt von ca. 40 Gewichtsprozent. Die Sprühtrocknung dieser Latices führt daher zu erhöhten Trocknungskosten. Die sprühgetrockneten Produkte führen zu Pasten mit ausgeprägtem dilatanten Fließverhalten. Sie sind somit für die Anwendung des Streichverfahrens wenig geeignet.

Aus der FR-A-20 86 635 ist ein zweistufiges Mikrosuspensionsverfahren bekannt, welches die Herstellung von PVC-Latices mit hohen Feststoffkonzentrationen beschreibt. Die Durchführung dieses Verfahrens verlangt jedoch neben dem Verfahrensschritt der Vorhomogenisierung die Herstellung eines Saatlatex und ist daher mit zu großem Aufwand verbunden.

Durch die diskontinuierliche Ausführung der Emulsionspolymerisation von Vinylchlorid erhält man Polymerisate mit niedrigen Emulgatorgehalten. Um bei der Polymerisation mit geringen Emulgatormengen stabile Latices und Pasten-Polyvinylchlorid mit niedriger Pastenviskosität zu erhalten, wurde vorgeschlagen, die sogenannte Saatlatex-Methode anzuwenden. Die Methode besteht darin, daß man bei der Emulsionspolymerisation einen Saatlatex (Keim-Latex bzw. Primär-Dispersion) vorlegt. Diese Verfahrensweise ist jedoch im großtechnischen Verfahren sehr aufwendig, da die Primär-Dispersion extra hergestellt, gelagert und dosiert werden muß. Zudem ist die erreichbare Stabilität der so hergestellten Latices nicht optimal und die Viskositäten der nach diesem Verfahren gewonnenen Polyvinylchlorid-Pasten liegen noch deutlich oberhalb der Pasten-Viskositäten, wie sie nach dem kontinuierlichen Verfahren gewonnen werden.

Nach den Verfahren der DE-C-19 64 029 und der ausgelegten Unterlagen des belgischen Patentes 656 985 wird der Emulgator während des Polymerisationsvorganges nach einem bestimmten Programm zugefügt. Durch diese Verfahrensweisen ist es möglich, Polyvinylchlorid mit besonders geringen Emulgatorgehalten herzustellen.

Auch die nach diesem Verfahren erhaltenen Polyvinylchlorid-Pasten besitzen aber noch eine wesentlich höhere Viskosität als solche, welche nach dem kontinuierlichen Verfahren erhalten werden.

Es stellt sich daher die Aufgabe, ein Verfahren zu finden, welches die Vorteile der kontinuierlichen mit den Vorteilen der diskontinuierlichen Verfahrensweise verbindet, d. h. ein Verfahren, welches ein Polyvinylchlorid liefert, das geringste Emulgatorgehalte zeigt und gleichzeitig zu lagerstabilen Pasten mit niedrigen Viskositäten im niedrigen und hohen Scherbereich führt.

Es sind diskontinuierliche Verfahren bekannt, die unter Verwendung von Dispergierhilfen (Fettalkoholen) durchgeführt werden. Wir nennen diesbezüglich zum Stand der Technik:

1. DE-A 22 60 957
2. DE-B 26 29 655
3. DE-A 28 50 105
4. DE-A 27 42 178
5. EP-B 00 30 524
6. DE-A 32 10 891

Die Polymerisation nach den Verfahren 1 und 2 wird mittels öllöslicher Aktivatoren, teilweise unter Zusatz von reduzierenden Mitteln, durchgeführt. Diese Verfahren führen zu Produkten, welche, zu Plastisolen verarbeitet, eine stark dilatante Fließcharakteristik aufweisen, wie es aus dem Vergleichsversuch A der DE-A·32 10 891 hervorgeht.

Das in 4. beschriebene Verfahren verwendet zur Aktivierung anorganische Katalysatoren. Nach 4. wird ein Gemisch, bestehend aus einem $C_{16}$-$C_{20}$Alkylalkohol und einem Alkylsulfat ($C_{12}$-$C_{18}$), in die Polymerisation eingesetzt. Wie die Vergleichsversuche B und C der DE-A 32 10 891 zeigen, erhält man nach 4. entweder instabile Latices oder feststoffarme Latices, die nach Sprühtrocknung ein Polyvinylchlorid liefern, das hochviskose Pasten mit einem ausgeprägten pseudoplastischen Fließvermögen ergibt.

Nach 5. wird eine wasserlösliche Substanz in Gegenwart von Wasser und Emulgator zunächst homogenisiert. Danach werden das Monomere und der Initiator zugegeben. Zur erfolgreichen Durchführung ist die Anwesenheit eines Saatlatex (Stabilisierungslatex) notwendig, und damit ist das Verfahren noch vergleichsweise aufwendig.

Nach dem in 6. beschriebenen Verfahren wird unter Verwendung von anorganischen Initiatoren ein Emulgatorsystem, bestehend aus einem Tensid und einem langkettigen Alkohol, absatzweise oder kontinuierlich dem Polymerisationsansatz zugegeben. Wie der Vergleichsversuch B zeigt, erhält man nach diesem Verfahren Polyvinylchorid, welches niedrigviskose Pasten ergibt, aber dessen Pastenlagerstabilität nicht optimal ist.

Gemäß 3. (DE-A 28 50 105) wird zwar eine aus Wasser, Tensid, Fettalkohol und Katalysator gebildete Prädispersion durch eine Homogenisiermaschine homogenisiert, es soll jedoch zwingend ein monomerlöslicher Katalysator eingesetzt werden. Die Viskosität der Pasten des so gewonnenen PVC ist zwar niedrigviskos, und die Pasten zeigen auch keine Dilatanz und eine gute Lagerstabilität, jedoch ist die Thermostabilität dieses Polyvinylchlorids noch nicht befriedigend.

Dieser Nachteil des Standes des Technik wird überwunden durch ein Verfahren zur Herstellung von verpastbaren Polymeren des Vinylchlorids oder Mischungen von Vinylchlorid mit bis zu 30 Gewichtsprozent copolymerisierbaren Monomeren durch diskontinuierliche Polymerisation in Gegenwart von wasserlöslichen Katalysatoren, Emulgatoren und langkettigen Alkoholen, das dadurch gekennzeichnet ist, daß eine Emulgatorsystem, bestehend aus

a) einem Alkalimetall- oder Ammoniumsalz einer 12 bis 18 C-Atome enthaltenden verzweigten oder unverzweigten Fettsäure, einer 10 bis 20 C-Atome enthaltenden verzweigten oder unverzweigten Alkylsulfonsäure, einer 8 bis 18 C-Atome in der verzweigten oder unverzweigten Alkylkette enthaltenden Alkylarylsulfonsäure oder eines 6 bis 14 C-Atome im Alkoholteil enthaltenden Sulfobernsteinsäureesters in Mengen von 0,2 bis 3,0 Gewichtsprozent, bezogen auf Monomeres,

b) einem geradkettigen oder verzweigten $C_{12}$-$C_{20}$-Alkanol in Mengen von 50 bis 200 Gewichtsprozent, bezogen auf das eingesetzte Tensid, und

c) Wasser,

mittels einer Homogenisiermaschine homogenisiert und anschließend mit Vinylchlorid oder einer Mischung von Vinylchlorid und copolymerisierbaren Monomeren vermischt wird, wonach die Mischung einer Polymerisationsreaktion unterworfen wird.

In einer bevorzugten Ausführungsform des Verfahrens werden 20 bis 80 Gewichtsprozent der homogenisierten Mischung dem Polymerisationsansatz vorgelegt und die restliche Menge nach einem Polymerisationsumsatz von 20 bis 60 % nachdosiert.

Das erfindungsgemäße Verfahren führt zu Produkten mit deutlich verbesserter Thermostabilität.

Das verwendbare Emulgatorsystem besteht aus:

a) Alkalimetall- oder Ammoniumsalzen von Fettsäuren, von Alkylsulfonsäuren oder Alkylarylsulfonsäuren oder Sulfobernsteinsäureestern in Mengen von 0,2 bis 3 Gewichtsprozent, vorzugsweise 0,5 bis 1,5 Gewichtsprozent, bezogen auf das Monomere,

b) einem geradkettigen oder auch verzweigten $C_{12}$-$C_{20}$-Alkylalkohol oder einem Gemisch mehrerer solcher Alkohole in Mengen von 50 bis 200 Gewichtsprozent, vorzugsweise 70 bis 150 Gewichtsprozent, bezogen auf das eingesetzte Tensid.

Als Alkali- oder Ammoniumsalze von Fettsäuren, die als Emulgatorkomponente (Tensid) verwendet werden sollen, kommen solche in Betracht, deren Alkylkette 12 bis 18 Kohlenstoffatome enthalten und verzweigt oder unverzweigt sind. Es werden beispielsweise eingesetzt: Natrium-laurat, Natrium-myristat, Natrium-palmitat, Natrium-iso-palmitat, Natrium-stearat. Auch die entsprechenden Kalium- und Ammoniumsalze sind geeignet.

Als Alkali- oder Ammoniumsalze von Alkylsulfonsäuren, die als Emulgatorkomponente eingesetzt werden, kommen solche infrage, deren Alkylreste 10 bis 20 Kohlenstoffatome, vorzugsweise 14 bis 17 Kohlenstoffatome, enthalten und verzweigt oder unverzweigt sind. Es kommen beispielsweise zur Anwendung: Natrium-decylsulfonat, Natrium-dodecylsulfonat, Natrium-myristylsulfonat, Natrium-palmitylsulfonat, Natriumstearylsulfonat, Natrium-heptadecylsulfonat, Natrium-arachylsulfonat. Auch die Kalium- oder Ammoniumsalze sind mit analogem Erfolg einsetzbar. I. a. wird man Gemische der genannten Individuen bevorzugen, wie diese bei der Sulfonierung von technischen Alkangemischen anfallen.

Als Alkali- und Ammoniumsalze von Alkylarylsulfonsäuren, die als Emulgatorkomponente verwendet werden sollen, lassen sich solche heranziehen, deren Alkylkette 8 bis 18 Kohlenstoffatome, vorzugsweise 10 bis 13 Kohlenstoffatome, enthält und verzweigt oder unverzweigt ist. Als Beispiele seien genannt: Natriumtetrapropylenbenzolsulfonat, Natrium-p-m-dodecylbenzolsulfonat, Natrium-octadecylbenzolsulfonat, Natriumoctylbenzolsulfonat, Natrium-decylbenzolsulfonat, Natrium-tridecylbenzolsulfonat, Natriumtetradecylbenzolsulfonat, Natrium-pentadecylbenzolsulfonat, Natrium-hexadecylbenzolsulfonat. Bevorzugt werden Gemische solcher Individuen eingesetzt. Es lassen sich gleichfalls auch die Kalium- oder Ammoniumsalze einsetzen.

Als Alkali- und Ammoniumsalze von Sulfobernsteinsäureester, die als Emulgatorkomponente Verwendung finden sollen, lassen sich solche einsetzen, deren Alkoholteil 6 bis 14 Kohlenstoffatome, vorzugsweise 8 bis 10 Kohlenstoffatome, enthält und verzweigt oder unverzweigt ist. Es kommen beispielsweise infrage: Natriumdihexylsulfosuccinat, Natrium-dioctylsulfosuccinat, Natrium-di-2-ethylhexylsulfosuccinat, Natriumdidecylsulfosuccinat, Natrium-didodecylsulfosuccinat, Natrium-diisodecylsulfosuccinat, Natriumdiisododecylsulfosuccinat, Natrium-tridecylsulfosuccinat, Natrium-di-tetradecylsulfosuccinat und die entsprechenden Kalium- und Ammoniumsalze. Es lassen sich auch Gemische der genannten Emulgatoren verwenden.

Als Dispergierhilfen können geradkettige oder verzweigte $C_{12}$-$C_{20}$-Alko-hole eingesetzt werden, wie

3

beispielsweise Laurylalkohol, Myristylalkohol, Palmitylalkohol, Stearylalkohol, Arachylalkohol, 2-Hexyldecanol, 2-Octyldodecanol. Es lassen sich auch Gemische der genannten Alkohole verwenden.

Die Komponenten a) und b) des Emulgatorsystems sollten in Wasser gelöst bzw. dispergiert werden. Anschließend wird die Mischung mittels einer Homogenisiermaschine homogenisiert. Falls die Schmelzpunkte der Fettalkohole oberhalb der Raumtemperatur liegen, werden der Dispergier- und Homogenisiervorgang vorteilhaft bei Temperaturen von 30 bis 70°C, d. h. oberhalb der Schmelztemperatur der Fettalkohole durchgeführt.

Bis zu 50 Gewichtsprozent des für die Polymerisation einzusetzenden Wassers können im Kessel vorgelegt werden, der andere Teil sollte mit der homogenisierten Dispersion (ca. 40 Gewichtsprozent) (bzw. mit dem Aktivator, ca. 5 bis 10 Gewichtsprozent) zugegeben werden. Man kann auch die gesamte Wassermenge mithomogenisieren; aber dies wäre energetisch weniger günstig. Dem Wasser können Puffersalze zugegeben werden, wie z. B. Natrium-pyrophosphat, Natrium-acetat oder Natrium-borat. Ca. 40 % der gesamten Wassermenge sollten mindestens mithomogenisiert werden.

Zu der homogenisierten Dispersion wird Vinylchlorid oder eine Mischung aus Vinylchlorid und copolymerisierbaren Monomeren unter Rühren gegeben. Nach Einstellung der gewünschten Polymerisationstemperatur wird mittels des gewählten Initiatorsystems die Polymerisationsreaktion gestartet und ausgesteuert. Besonders vorteilhaft in Bezug auf die Latexstabilität ist es, wenn lediglich 20 bis 80 Gewichtsprozent, vorzugsweise 40 bis 60 Gewichtsprozent, von der homogenisierten Dispersion der Polymerisation vorgelegt und die entsprechende Restmenge, frisch homogenisiert, nach einem Polymerisationsumsatz von 20 bis 60 %, bevorzugt 30 bis 50 %, nachgegeben wird (absatzweise oder kontinuierlich).

Als Comonomere lassen sich z. B. einsetzen: Vinylacetat, Vinylidenchlorid, Vinylether, Acrylnitril und Acrylsäureester. Das Comonomere kann im Copolymerisat bis zu 30, vorzugsweise zwischen 1 und 20 Gewichtsprozent, anwesend sein.

Das Verhältnis Monomere zu Wasser kann bis zu sehr hohen Vinylchloridkonzentrationen beliebig sein (ca. 1: 0,5 bis 1 : 1,6). Im allgemeinen wird man bestrebt sein, so zu polymerisieren, daß man Latices mit einem möglichst hohen Feststoffgehalt erhält von beispielsweise 45 bis 50 Gewichtsprozent.

Der Endumsatz soll natürlich möglichst hoch sein.

Als wasserlösliche Katalysatoren lassen sich die üblichen Perverbindungen einsetzen, wie $H_2O_2$, Kaliumpersulfat sowie die Redoxsysteme, wie sie z. B. in Kainer, Polyvinylchlorid und Vinylchlorid-Mischpolymerisate, Springer-Verlag, 1965, Seite 46 ff., angegeben sind.

Die Initiatoren können in üblichen Mengen von 0,005 bis 0,5 Gewichtsprozent, vorzugsweise 0,01 bis 0,1 Gewichtsprozent, bezogen auf das Monomere, eingesetzt werden.

Die Polymerisationstemperatur kann - je nach gewünschtem Molekulargewicht - 40 bis 70°C betragen.

Die Polymerisatisonsdauer ist - wie stets - von der Polymerisationstemperatur und der Katalysatorkonzentration abhängig. Sie kann etwa 4 bis 16 Stunden betragen.

Es sollte zweckmäßigerweise mit üblichen Umfangsgeschwindigkeiten von 10 bis 70 UpM und mit den bei Emulsions- bzw. Mikrosuspensionspolymerisationsverfahren üblicherweise eingesetzten Blattrührern gerührt werden.

Das erfindungsgemäße Verfahren wird anhand der nachstehenden Beispiele erläutert.

## Beispiel 1

In einem 2-m³-Behälter werden 1 650 kg 60°C warmes, entmineralisiertes Wasser vorgelegt. Unter Rühren werden 18 kg Natrium-alkylbenzolsulfonat (Gemische von $C_{10}$-$C_{13}$-Alkylbenzolsulfonaten), 22 kg eines Gemisches aus etwa gleichen Teilen von Cetyl- und von Stearylalkohol und 3,5 kg Mononatriumphosphat zugegeben. Das Gemisch wird durch einen einstufigen Kolbenpumpenhomogenisator hindurchgeführt. Der Druck im Homogenisierkopf beträgt 180 .10⁷ Pa. s, die Rückführungszeit (Einstellzeit) 5 Minuten. Das homogenisierte Gemisch wird unter Ausschluß von Luft-Sauerstoff einem 6-m³-Rührautoklaven, der über den Mantel gekühlt oder beheizt werden kann, zugeleitet. (Der Autoklav ist zudem mit einem Rückflußkühler ausgerüstet.) Hierzu werden 1 800 kg Vinylchlorid gegeben. Die Mischung wird auf 52°C erwärmt. Die Rührerdrehzahl wird auf 10 UpM eingestellt. Die Polymerisationsreaktion wird mittels einer 0,5 %igen wäßrigen $H_2O_2$- und einer 0,2 %igen wäßrigen Ascorbinsäurelösung (zu jeweils gleichen Teilen) gestartet und ausgesteuert. Die Dosierung wird so eingestellt, daß bei nahezu voller Kühlkapazität (Mantel: 150 000 kcal/h; Rückflußkühler: 30 000 kcal/h) die Polymerisationstemperatur von 52°C konstant bleibt. Die Zeit bis zum Druckabfall beträgt 5 Stunden.

Die Aufarbeitung der Dispersion (Feststoffgehalt von 46,5 %) erfolgt in einer Sprühtrocknungsanlage. Die Eingangstemperatur der Trocknerluft beträgt dabei 160°C, die Ausgangstemperatur 60°C. Ansonsten erfolgt die Aufarbeitung wie in der DE-B- 21 46 735 beschrieben. Aus 100 Gewichtsteilen des so erhaltenen Polyvinylchlorid-Pulvers und aus 60 Gewichtsteilen Di-2-ethylhexylphthalat (DOP) wird eine Paste hergestellt und deren Viskosität nach 2 und 24 Stunden Lagerung bei verschiedenen Schergeschwindigkeiten in einem Rotations-Rheometer (Gerät: Rheomat 30 der Firma Contraves AG, Zürich) gemessen. Der Eindickfaktor EF ist ein Maß für die Lagerstabililtät der Paste. Er wird ermittelt aus dem Quotienten des Viskositätswertes, bestimmt nach einer Lagerzeit von 24 Stunden, dividiert durch den Viskositätswert, bestimmt nach 2 Stunden, bei einer Schergeschwindigkeit von D $= 1$ $s^{-1}$. Der Tabelle sind die Pastenviskositäten bei verschiedenen Schergeschwindigkeiten sowie der Eindickfaktor EF zu entnehmen.

## Beispiele 2 und 3

Man arbeitet wie in Beispiel 1, verwendet jedoch als Emulgator:
18 kg eines $C_{12}$-$C_{18}$-Gemisches von Natrium-alkylsulfonaten. Der Feststoff der Dispersion beträgt 46,2 % (Beispiel 2).
18 kg Natrium-di-2-ethylhexylsulfosuccinat. Der Feststoff der Dispersion beträgt 47,5 % (Beispiel 3).
Die Aufarbeitung der Dispersionen erfolgt wie in Beispiel 1. Die Pastenviskositäten der Pulver, angepastet mit DOP im Verhältnis 100: 60, und die Lagerstabilität der Pasten sind der Tabelle zu entnehmen.

## Vergleichsversuch A (entspricht DE-A 27 42 178)

Man verfährt wie im Beispiel 2, unterläßt jedoch den Verfahrensschritt der Homogenisierung. Der Polymerisationsansatz koaguliert und ist somit weder pumpbar, noch mittels Sprühtrocknung aufzuarbeiten.

## Vergleichsversuche B bis D (gemäß DE-A 32 10 891)

Man wählt die Einsatzstoffe und -mengen wie in den Beispielen 2 und 3. Der Verfahrensablauf gestaltet sich, wie er in Beispiel 1 der DE-A 32 10 891 beschrieben ist.
Die Aufarbeitung der Dispersion erfolgt wie in Beispiel 1. Die Pastenviskositäten des Pulvers, angepastet mit DOP im Verhältnis 100 : 60, und der Eindickfaktor sind der Tabelle zu entnehmen.

## Tabelle

| Beispiel bzw. Vergleichsversuch | Pastenviskosität (PVC/DOP-Verhältnis 100/60) in dPa s bei Schergeschwindigkeit D in $s^{-1}$ | | | | | | | | Eindickfaktor EF (eta 24 h/eta 2 h) |
|---|---|---|---|---|---|---|---|---|---|
| | D = 0,3 | | D = 1 | | D = 10 | | D = 100 | | bei D = 1 $s^{-1}$ |
| | 2 h | 24 h | 2 h | 24 h | 2 h | 24 h | 2 h | 24 h | |
| 1 | 50 | 65 | 45 | 52 | 44 | 48 | 42 | 42 | 1,2 |
| 2 | 85 | 100 | 50 | 61 | 38 | 45 | 38 | 42 | 1,2 |
| 3 | 90 | 110 | 47 | 52 | 40 | 42 | 40 | 41 | 1,1 |
| A | - | - | - | - | - | - | - | - | - |
| B | 62 | 105 | 50 | 85 | 44 | 66 | 42 | 55 | 1,7 |
| C | 85 | 210 | 65 | 130 | 46 | 85 | 44 | 70 | 2,0 |
| D | 95 | 161 | 45 | 72 | 40 | 58 | 38 | 54 | 1,6 |

## Patentansprüche

1. Verfahren zur Herstellung von verpastbaren Polymeren des Vinylchlorids oder Mischungen von Vinylchlorid mit bis zu 30 Gewichtsprozent copolymierisierbaren Monomeren durch diskontinuierliche Polymerisation in Gegenwart von wasserlöslichen Katalysatoren, Emulgatoren und langkettigen Alkoholen, dadurch gekennzeichet,
daß ein Emulgatorsystem, bestehend aus
a) einem Alkalimetall- oder Ammoniumsalz einer 12 bis 18 C-Atome enthaltenden verzweigten oder unverzweigten Fettsäure, einer 10 bis 20 C-Atome enthaltenden verzweigten oder unverzweigten Alkylsulfonsäure, einer 8 bis 18 C-atome in der verzweigten oder unverzweigten Alkylkette enthaltenden Alkylarylsulfonsäure oder eines 6 bis 14 c-Atome im Alkoholteil enthaltenden Sulfonbernsteinsäureesters in

**0 108 884**

Mengen von 0,2 bis 3,0 Gewichtsprozent, bezogen auf Monomeres,

b) einem geradkettigen oder verzweigten $C_{12}$-$C_{20}$-Alkanol in Mengen von 50 bis 200 Gewichtsprozent, bezogen auf das eingesetzte Tensid,

c) Wasser,

mittels einer Homogenisiermaschine homogenisiert und anschließend mit Vinylchlorid oder einer Mischung von Vinylchlorid und copolymerisierbaren Monomeren vermischt wird, wonach die Mischung einer Polymerisationsreaktion unterworfen wird.

2. Verfahren nach Anspruch 1,
dadurch gekennzeichnet,
daß 20 bis 80 Gewichtsprozent der homogenisierten Mischung dem Polymerisationsansatz vorgelegt und die restliche Menge nach einem Polymerisationsumsatz von 20 bis zu 60 % nachdosiert wird.

**Claims**

1. A process for the production of a pastable polymer of vinyl chloride or of a mixture of vinyl chloride with up to 30% by weight of copolymerisable monomer by discontinuous polymerisation in the presence of a watersoluble catalyst, an emulsifier and a long-chain alcohol, characterised in that an emulsifier system composed of

a) an alkali metal or ammonium salt of a branched or unbranched fatty acid of 12 to 18 carbon atoms, of a branched or unbranched alkylsulphonic acid of 10 to 20 carbon atoms, of an alkylarylsulphonic acid of 8 to 18 carbon atoms in the alkyl chain, which is branched or unbranched, or of a sulphosuccinic acid ester of 6 to 14 carbon atoms in the alcohol moiety, the salt being used in an amount of 0.2 to 3.0% by weight, based on the monomer content,

b) a straight-chain or branched $C_{12}$ to $C_{20}$ alkanol, the alkanol being used in an amount of 50 to 200% by weight, based on the surfactant added, and

c) water

is homogenised by means of a homogenising machine and is subsequently mixed with vinyl chloride or with a mixture of vinyl chloride and the copolymerisable monomer(s), after which the mixture is subjected to a polymerisation reaction.

2. A process according to claim 1, characterised in that 20 to 80% by weight of the homogenised mixture is placed in the polymerisation charge beforehand and the remainder is introduced later after a degree of polymerisation of 20% but not more than 60% has been achieved.

**Revendications**

1. Procédé pour la préparation de polymères délayables du chlorure de vinyle ou de mélanges de chlorure de vinyle avec jusqu'à 30 % en poids de monomères copolymérisables, par polymérisation discontinue en présence de catalyseurs hydrosolubles, d'émulsifiants et d'alcools à longue chaîne,

caractérisé par le fait que l'on homogénéise au moyen d'une machine à homogénéiser un système d'émulsifiant formé

a) d'un sel de métal alcalin ou d'ammonium d'un acide gras ramifié ou non ramifié contenant de 12 à 18 atomes de carbone, d'une acide alcane-sulfonique ramifié ou non ramifié contenant de 10 à 20 atomes de carbone, d'un acide alkylarène-sulfonique contenant de 8 à 18 atomes de carbone dans la chaîne alkyle ramifiée ou non ramifiée ou d'un ester d'acide sulfosuccinique contenant de 6 à 14 atomes de carbone dans le fragment alcoolique, en quantités de 0,2 à 3,0 % en poids relativement au monomère,

b) d'un alcanol en $C_{12}$ à $C_{20}$ à chaîne droite ou ramifiée, en quantités de 50 à 200 % en poids relativement au surfactif utilisé,

c) d'eau

et qu'ensuite on le mélange à du chlorure de vinyle ou à un mélange de chlorure de vinyle et de monomères copolymérisables, après quoi on soumet le mélange à une réaction de polymérisation.

2) Procédé selon la revendication 1, caractérisé par le fait que l'on place initialement dans le mélange de polymérisation de 20 à 80 % en poids du mélange homogénéisé et que l'on amène de façon dosée la quantité restante après une conversion par polymérisation de 20 à 60 %.